# EUROPÄISCHE PATENTSCHRIFT

(11) **EP 2 783 560 B1**
(45) Veröffentlichungstag und Bekanntmachung des Hinweises auf die Patenterteilung: **14.03.2018**
(21) Anmeldenummer: 14401038.6
(22) Anmeldetag: 24.03.2014
(51) Int. Cl.: A01C 17/00, A01C 21/00

(54) **Vorrichtung zum Ermitteln von zumindest einem Verteilungsparameter**
Device for determining at least one distribution parameter
Dispositif de détermination d'au moins un paramètre de répartition

(30) Priorität: 26.03.2013 DE 102013103060
(43) Veröffentlichungstag der Anmeldung: 01.10.2014
(73) Patentinhaber: Amazonen-Werke H. Dreyer GmbH & Co. KG, 49205 Hasbergen (DE)
(72) Erfinder: Rahe, Florian, 49504 Lotte (DE); Heitmeyer, Kilian, 49152 Bad Essen (DE)

(56) Entgegenhaltungen:
- EP-A1- 2 756 745
- EP-A2- 2 520 148
- EP-B1- 0 300 580
- DE-A1- 19 723 359

## Beschreibung

Die Erfindung betrifft eine Vorrichtung zum Ermitteln von zumindest einem Verteilungsparameter gemäß des Oberbegriffes des Patentanspruches 1.

Eine derartige Vorrichtung zum Ermitteln von zumindest einem Verteilungsparameter für einen Schleuderstreuer ist in vielfältiger Weise bereits in verschiedenen Unterlagen beschrieben. Zur Überwachung der Arbeitsweise eines Schleuderstreuers werden Sensoren eingesetzt. Wie dies beispielsweise in der EP 0 300 580 B1, EP 0 751 703 B1, DE 197 23 359 A1, EP 0682 857 B1 beschrieben ist. In dem EP 0 300 580 B1 wird optische Sensorik, in dem EP 0 751 703 B1 wird eine kameraähnliche Sensorik, in dem DE 197 23 359 A1 und dem EP 0682 857 B1 wird jeweils auf mechanischer Basis arbeitende Sensorik eingesetzt.
In den EP 0 300 580 B1 und EP 0 751 703 B1 sind Lösungen vorgeschlagen, welche in optischer Form realisiert sind. Hierbei werden die zu verteilenden Partikel optisch mit Sensoren erfasst und daraus Parameter für die Verteilung auf dem Feld, bzw. für die Einstellung der Maschine hergeleitet. Hierbei ergibt sich das Problem, dass das mit dem Schleuderstreuer zu verteilende Gut häufig staubig ist. Somit ist in kurzer Zeit mit der Verschmutzung einer zu starken auf optischer Basis arbeitenden Sensoren zu rechnen. Dies ist insbesondere bei optischen Sensoren sehr problematisch, weil Verschmutzung das Messergebnis solcher Sensoren stark beeinflusst. Somit ist dadurch mit einem frühzeitigen Ausfall der Sensorik zu rechnen. Weiterhin sind optische Sensoren empfindlich gegen Fremdlicht, insbesondere gegen direktes Sonnenlicht. Da der Schleuderstreuer im Freien arbeitet, ist dies ein weiteres Problem.

Eine Messung mittels Radarwellen wird in der EP 2 756 745 A1, die eine frühere Priorität beansprucht, beschrieben, wobei hier eine Verwendung der Verteilparameter zur Anpassung der Einstellparameter des Schleuderstreuers nicht vorgesehen ist.
Die auf mechanischen Messprinzipien basierende Sensorik gemäß der DE 197 23 359 A1 und dem EP 0682 857 B1 erfordern eine Interaktion mit dem zu verteilenden Gut. Durch diese Interaktion werden die zu verteilenden Partikel abgelenkt, so dass die Verteilung der Partikel auf dem Feld durch die Messelemente negativ beeinflusst wird. Ziel der Messung ist es jedoch die Verteilung der Partikel auf dem Feld zu bestimmen, bzw. zu optimieren. Dies steht jedoch mit der Beeinflussung der Materialverteilung durch die Messelemente im Widerspruch.
Der Erfindung liegt die Aufgabe zugrunde, eine Vorrichtung zum Ermitteln von zumindest einem Verteilungsparameter der von einem Schleuderstreuer ausgebrachten Materialpartikel und ein hierfür geeignetes Messverfahren aufzuzeigen, das zum einen ohne Beeinflussung der Materianlpartikel, also berührungslos, die Verteilcharakteristik des Schleuderstreuers bestimmt, zum anderen aber auch unempfindlich gegen Verschmutzung ist.
Diese Aufgabe wird erfindungsgemäß durch die Merkmale des Patentanspruches 1 gelöst.
Somit ist vorgesehen, dass die Radarstrahlen eine Wellenlänge zwischen 2mm und 15mm aufweisen und entsprechend des zumindest einen ermittelten Verteilungsparameters der Bordrechner entsprechend eines in seinem Speicher hinterlegten Einstellprogrammes, Einstellalgorithmen und/oder Einstelltabellen zumindest einen Einstellparameter der Dosier- und/oder Verteilorgane des Streuers bereitstellt.. Radarstrahlen durchdringen viele Materialien und werden zum Teil aber auch reflektiert. Eine kleine Düngerschicht oder Verschmutzungsschicht, die einen optischen Sensor schon massiv beeinflussen würde, wird von einem Radarsensor kaum gesehen bzw. wahrgenommen. Ein Radarsensor ist also im Hinblick auf die Datenterfassung verschmutzungsunanfällig. Weiterhin hat ein Radarsensor einen entscheidenden Vorteil in seiner Arbeitsweise. Solche Sensoren sind im Allgemeinen zur Detektion von bewegten Gegenständen und deren Geschwindigkeit vorgesehen. Sie liefern ein Signal, welches proportional zum Abstand, zur Größe und zum Reflektionsvermögen des beobachteten Objektes ist, sowie eine Frequenz, welche zur Geschwindigkeit des Objektes proportional ist. Da die zu beobachtenden abgeschleuderten und zu verteilenden Materialpartikel sehr viel schneller als alle anderen Objekte in der Reichweite des Sensors sind, kann durch eine Bewertung der Frequenz des Signals die Information über die zu beobachteten Objekten von den anderen Objekten überraschend leicht getrennt werden. Hierzu ist es lediglich notwendig, die Sensoren in einem Winkel zur Flugbahn der abgeschleuderten und zu verteilenden Materialpartikel auszurichten. Weiterhin kann die Geschwindigkeit der Teilchen bestimmt werden, welches weitere Aufschlüsse über die Streugutverteilung gibt. Die Bereitstellung von Einstellparametern der Dosier- und/oder Verteilorgane entsprechend des zumindest einen ermittelten Vertilungsparameters durch den Bordrechner entsprechend eines in seinem Speicher hinterlegten Einstellprogramms sorgt für eine Einstellung des Streuers entsprechend den ermittelten Messergebnissen. Um besonders gute Messergebnis zu erzielen kann es sinnvoll sein, dass die jeweilige Sende- und/oder Empfangseinheit außerhalb der Umlaufbahnen der auf der Schleuderscheibe angeordneten Wurfschaufeln angeordnet sind.
Um eine verbesserte Datenbasis in einfacher Weise gewährleisten zu können, ist vorgesehen, dass die Sende- und/oder Empfangseinheiten mehrere Sende- und/oder Empfangselemente aufweisen.

Weiterhin ist vorgesehen, dass die der jeweiligen Sende- und/oder Empfangseinheit zugeordneten Sende- und/oder Empfangselemente zumindest annähernd kreisförmig um die Schleuderscheibe außerhalb der Umlaufbahnen der auf der Schleuderscheibe angeordneten Wurfschaufeln angeordnet sind. Somit sind die Sensorelemente ringförmig konzentrisch um die Schleuderscheibe und oberhalb dieser angeordnet. Durch diese Anordnung wird sichergestellt, dass die vorbeifliegenden Partikel immer den gleichen Abstand zu den unterschiedlichen Sensoren haben. Da es sich für die verschiedenen Sensoren immer um die gleichen Partikel handelt, und der Abstand aller Sensoren zu den Partikeln gleich ist, gibt die Größe des Messsignals die Größe und bei vielen kleinen Partikeln die Menge der Teilchen an, die an dem Sensor vorbeifliegen. Die Verteilung der Materialpartikel ist ein wesentlicher Parameter, der durch die Sensorik erfasst werden soll.

In einer weiteren Ausführung der Erfindung sind die Sensoren über ein Bussystem mit einer oder mehreren, beispielsweise als Bordrechner ausgebildeten Recheneinheiten auf dem Schleuderstreuer verbunden, die die gemessenen Daten bewerten. Dabei sind in der Recheneinheit Algorithmen und oder Tabellen gespeichert, die eine Analyse der Messdaten ermöglichen mit denen die Einstellqualität des Düngerstreuers überwacht und / oder optimiert wird.

Eine besonders vorteilhafte Anordnung der Sensorelemente ergibt sich dadurch , dass die jeweiligen Sende- und/oder Empfangseinheiten zumindest annähernd kreisförmig um die Schleuderscheibe außerhalb der Umlaufbahnen der auf der Schleuderscheibe angeordneten Wurfschaufeln angeordnet sind.

Versuche haben gezeigt, dass es vorteilhaft ist, wenn die Radarstrahlen in einem sich öffnenden abstrahlenden Bereich von zumindest 20° ausgesendet werden.

Eine gute Erfassung der von den Schleuderscheiben abgeschleuderten Materialpartikel durch die Sensorelemente, lässt sich dadurch erreichen, dass die Radarstrahlen von dem Radarsensor so ausgesendet werden, dass die ausgesendeten Radarstrahlen die Flugbahn der sich im Flug befindlichen abgeworfenen Materialpartikel schneiden, und zwar derart, dass der Winkel zwischen dem ausgesendeten Radarstrahlen und der Material Flugbahn ungleich 90° beträgt.

Zur vorteilhaften Erfassung der von den Schleuderscheiben abgeschleuderten Materialpartikel durch die Sensorelemente lässt sich dadurch erreichen, dass die Radarstrahlen von dem Radarsensor so ausgesendet werden, dass die ausgesendeten Radarstrahlen die Flugbahn der sich im Flug befindlichen abgeworfenen Materialpartikel schneiden, und zwar derart, dass der Winkel zwischen dem ausgesendeten Radarstrahlen und der Material Flugbahn zwischen 5° und 70° beträgt.

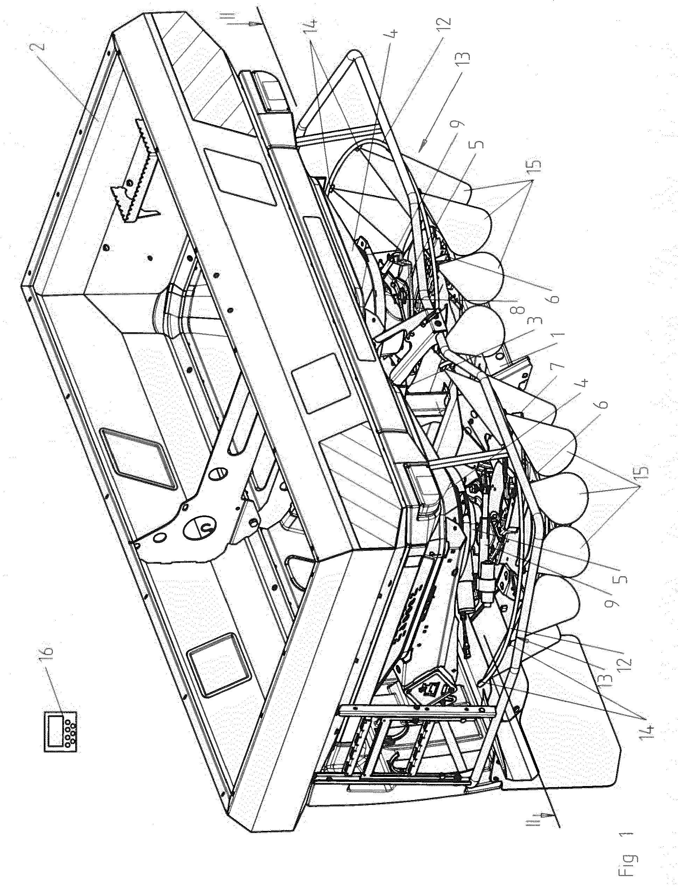

Weitere Einzelheiten der Erfindung sind der Beispielsbeschreibung zu entnehmen. Die Zeichnungen zeigen
- Fig.1: einen Schleuderstreuer mit den erfindungsgemäßen Radarsensoren in perspektivischer Darstellung und

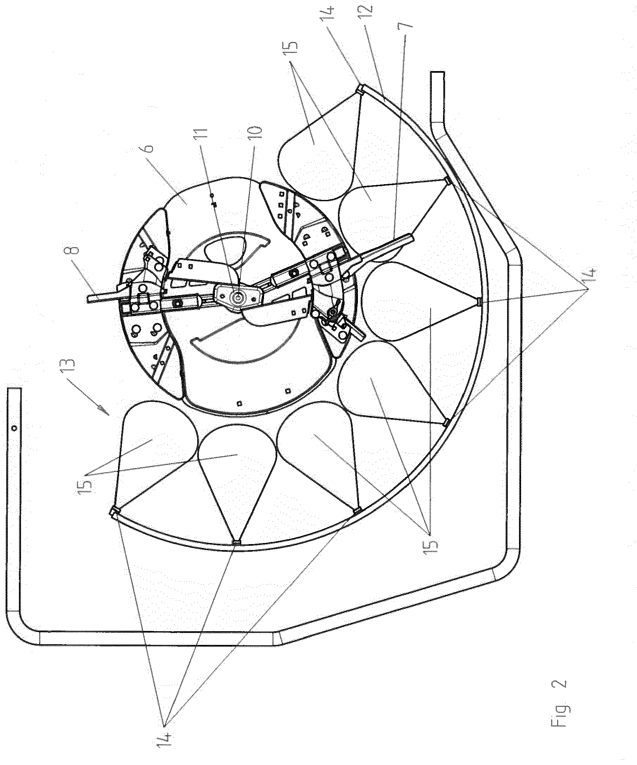

- Fig.2: die Anordnung der Radarsensoren zu der in Fahrtrichtung linken Schleuderscheibe in der Ansicht II - II und im vergrößerten Maßstab.

Der Schleuderdüngerstreuer weist einen Rahmen 1 und einen Vorratsbehälter 2 auf. Auf der Vorderseite des Rahmens 1 sind in bekannter und daher nicht näher dargestellter Weise Dreipunktkupplungselemente zum Anbau an einen Schlepperkraftheber angeordnet. Der Vorratsbehälter 2 weist in seinem unteren Bereich die beiden durch das dachförmige Mittelteil 3 voneinander getrennten Auslauftrichter 4 auf. Die Auslauftrichter 4 sind jeweils durch ein Dosierorgan 5 abgeschlossen. Unterhalb der Dosierorgane 5 ist jeweils eine rotierend angetriebene Schleuderscheibe 6 angeordnet. Die Dosierorgane 5 leiten das sich im Vorratsbehälter 2 befindliche zu verteilende Material in einstellbaren Mengen den Schleuderscheiben 6 zu. Auf den Schleuderscheiben 6 sind Wurfschaufeln 7 und 8 angeordnet, welche das ihnen zugeleitete Material in Bereitverteilung auf der Bodenoberfläche verteilen. Dem Dosierorgan 5 ist jeweils ein Einstellmittel 9 zum Einstellen des Dosierorgans 5 zugeordnet. Damit kann das der Schleuderscheibe 6 zu dosierte Material, welches sich im Vorratsbehälter 2 befindet, in der jeweiligen Menge entsprechend eingestellt werden.

Jede Schleuderscheibe 6 ist über eine an einer nicht dargestellten Lagerwelle 10 befestigte Nabe 11 angeordnet. Die Lagerwelle ist mittels einer nicht dargestellten Lageranordnung am Rahmen 1 drehbar gelagert und wird über einen bekannten und daher nicht dargestellten motorischen Antrieb rotierend angetrieben.

Die Schleuderstreuer ist eine Vorrichtung zum Ermitteln von zumindest einem Verteilungsparameter der von einem Schleuderstreuer in einstellbarer Weise ausgebrachten und durch die auf den rotierend angetriebenen Schleuderscheiben 6 angeordneten Wurfschaufeln 7 und 8 in Breitverteilung auf der Bodenoberfläche verteilten Materialpartikel zu geordnet. Hierzu sind an dem Rahmen 1 des Streuers die beiden kreisförmig gebogenen Haltebügel 12 befestigt. An diesen Haltebügeln 12 sind die Sende- und/oder Empfangseinheiten 13 außerhalb der Umlaufbahnen der auf den Schleuderscheiben 6 angeordneten Wurfschaufeln 7 und 8 angeordnet. Die Sende- und/oder Empfangseinheiten 13 weisen mehrere Sende- und/oder Empfangselemente 14 auf.

Die der jeweiligen Sende- und/oder Empfangseinheit 13 zugeordneten Sende- und/oder Empfangselemente 14 sind zumindest annähernd kreisförmig um die Schleuderscheibe 6 außerhalb der Umlaufbahnen der auf der Schleuderscheibe 6 angeordneten Wurfschaufeln 6 und 7 angeordnet sind. Die Sende- und Empfangseinheiten 13 sind als Radarstrahlen aussendender Radarsensoren 14 ausgebildet ist

Die Radarsensoren 14 senden elektromagnetischen Wellen, die als Radarkeulen 15 dargestellt sind aus, welche von den sich im Flug befindlichen Materialpartikeln reflektiert werden. Die reflektierten Wellen werden von den Empfangseinheiten 14 empfangen. Die eine Sende- und Empfangseinheiten 14 sind über nicht dargestellte Datenübertragungsleitungen mit einem Bordcomputer 16 verbunden. In dem Speicher des Bordcomputers 16 ist ein Auswerteprogramm abgespeichert, mittels welchem die von den Empfangseinheiten 14 empfangenen und von den sich im Flug befindlichen Materialpartikel reflektierten Wellen ausgewertet werden. Hieraus wird zumindest ein Verteilungsparameter, wie Flugrichtung, Fluggeschwindigkeit, Ausbringmenge und/oder Verteilgenauigkeit der ausgebrachten Materialpartikel ermittelt.

Die Radarstrahlen werden von den Radarsensoren 14 in einem sich öffnenden abstrahlenden Bereich von zumindest 20° ausgesendet, wie die Radarkeulen 15 verdeutlichen.

Die Radarstrahlen werden von den Radarsensoren 14 so ausgesendet, dass die ausgesendeten Radarstrahlen die Flugbahn der sich im Flug befindlichen abgeworfenen Materialpartikel schneiden, und zwar derart, dass der Winkel zwischen dem ausgesendeten Radarstrahlen und der Materialflugbahn ungleich 90° beträgt. Die Radarstrahlen von dem Radarsensor 14 werden bevorzugt so ausgesendet, dass die ausgesendeten Radarstrahlen die Flugbahn der sich im Flug befindlichen abgeworfenen Materialpartikel schneiden, und zwar derart, dass der Winkel zwischen dem ausgesendeten Radarstrahlen und der Materialflugbahn zwischen 5° und 70° beträgt.

Die Radarstrahlen weisen eine Wellenlänge zwischen 2mm und 15mm auf. Der Bordrechner 16 stellt entsprechende eines in seinem Speicher hinterlegten Einstellprogrammes, Einstellalgorithmen und/oder Einstelltabellen zumindest einen Einstellparameter der Dosier- 5, 9 und/oder Verteilorgane 6, 7, 8 des Streuers bereit bzw. berechnet sie entsprechend. Die Einstellelemente 9 für die Dosier- 5 und/oder Verteilorgane 6, 7, 8 des Schleuderstreuers werden von dem Bordrechner 16 entsprechend der ermittelten Verteilungsparameters angesteuert und eingestellt.

Zu der vorbeschriebenen Ermittlung von Daten über die Materialverteilung können Radarsensoren 14, die übliche Weise als Geschwindigkeitssensor verwendet werden, eingesetzt werden. Dazu müssen die Radarsensoren 14 der Messrichtung 13 nur leicht in oder gegen die Flugrichtung der abgeworfenen Materialpartikel, hier die Düngerkörner ausgerichtet werden. Radarsensoren 14 liefern ein sinusförmiges Signal, wenn ein bewegtes Objekt gemessen wird. Die Amplitude ist proportional zur Menge der zurückreflektierten Strahlung, also proportional zum Abstand und der Reflexion des beobachteten Objektes (Größe). Die Frequenz des Signals ist proportional zur Geschwindigkeit des Objektes. Dadurch kann ein sehr guter Filter für die Detektion des Düngers aufgebaut werden, da der Dünger sehr schnell ist, so dass sich durch die Frequenz des Signals, das Signal durch den Dünger von allen anderen Signalen unterscheiden lässt.

## Patentansprüche

1. Vorrichtung zum Ermitteln von zumindest einem Verteilungsparameter der von einem Schleuderstreuer in einstellbarer Weise ausgebrachten und durch die auf einer rotierend angetriebenen Schleuderscheibe (6) angeordneten Wurfschaufeln (7, 8) in Breitverteilung auf der Bodenoberfläche verteilten Materialpartikel durch von zumindest einer Sendeeinheit (13, 14) ausgesandten elektromagnetischen Wellen, welche von den sich im Flug befindlichen Materialpartikeln reflektiert und die reflektierten Wellen von zumindest einer Empfangseinheit (13, 14) empfangen werden, wobei in die zumindest eine Sende- und Empfangseinheit (13, 14) mit einem Bordcomputer (16) verbunden sind, wobei in dem Speicher des Bordcomputers (16) ein Auswerteprogramm abgespeichert ist, mittels welchem die von der zumindest einen Empfangseinheit (13, 14) empfangenen und von den sich im Flug befindlichen Materialpartikel reflektierten Wellen ausgewertet und hieraus die zumindest einen Verteilungsparameter, wie Flugrichtung, Fluggeschwindigkeit, Ausbringmenge und/oder Verteilgenauigkeit der ausgebrachten Materialpartikel ermittelt werden, wobei die zumindest eine Sende- und Empfangseinheit (13, 14) als Radarstrahlen aussendender Radarsensor ausgebildet ist, und wobei entsprechend des zumindest einen ermittelten Verteilungsparameters der Bordrechner (16) entsprechend eines in seinem Speicher hinterlegten Einstellprogrammes, Einstellalgorithmen und/oder Einstelltabellen zumindest einen Einstellparameter der Dosier- (5) und/oder Verteilorgane (6, 7, 8) des Streuers bereitstellt, **dadurch gekennzeichnet, dass** die Radarstrahlen eine Wellenlänge zwischen 2mm und 15mm aufweisen.

2. Vorrichtung nach Anspruch 1, **dadurch gekennzeichnet, dass** die jeweilige Sende- und/oder Empfangseinheit (13, 14) außerhalb der Umlaufbahnen der auf der Schleuderscheibe (6) angeordneten Wurfschaufeln (7, 8) angeordnet sind.

3. Vorrichtung nach Anspruch 1, **dadurch gekennzeichnet, dass** die Sende- und/oder Empfangseinheiten (13) mehrere Sende- und/oder Empfangselemente (14) aufweisen.

4. Vorrichtung nach Anspruch 1 oder 3, **dadurch gekennzeichnet, dass** die der jeweiligen Sende- und/oder Empfangseinheit (13) zugeordneten Sende- und/oder Empfangselemente (14) zumindest annähernd kreisförmig um die Schleuderscheibe (6) außerhalb der Umlaufbahnen der auf der Schleuderscheibe (6) angeordneten Wurfschaufeln (7, 8) angeordnet sind.

5. Vorrichtung nach Anspruch 3, **dadurch gekennzeichnet, dass** die jeweiligen Sende- und/oder Empfangseinheiten (13,14) zumindest annähernd kreisförmig um die Schleuderscheibe (6) außerhalb der Umlaufbahnen der auf der Schleuderscheibe (6) angeordneten Wurfschaufeln (7, 8) angeordnet sind.

6. Vorrichtung nach Anspruch 1, **dadurch gekennzeichnet, dass** die Radarstrahlen in einem sich öffnenden abstrahlenden den Bereich von zumindest 20° ausgesendet werden.

7. Vorrichtung nach Anspruch 1, **dadurch gekennzeichnet, dass** die Radarstrahlen von dem Radarsensor (14) so ausgesendet werden, dass die ausgesendeten Radarstrahlen die Flugbahn der sich im Flug befindlichen abgeworfenen Materialpartikel schneiden, und zwar derart, dass der Winkel zwischen dem ausgesendeten Radarstrahlen und der Materialflugbahn ungleich 90° beträgt.

8. Vorrichtung nach Anspruch 7, **dadurch gekennzeichnet, dass** die Radarstrahlen von dem Radarsensor (14) so ausgesendet werden, dass die ausgesendeten Radarstrahlen die Flugbahn der sich im Flug befindlichen abgeworfenen Materialpartikel schneiden, und zwar derart, dass der Winkel zwischen dem ausgesendeten Radarstrahlen und der Materialflugbahn zwischen 5° und 70° beträgt.

## Claims

1. Apparatus for determining at least one distribution parameter of the material particles, which are applied by a centrifugal spreader in an adjustable manner and are distributed in a wide spread over the surface of the ground by the thrower blades (7, 8) arranged on a rotationally driven centrifugal disc (6), by means of electromagnetic waves which are emitted by at least one transmitting unit (13, 14) and are reflected by the material particles in flight, and the reflected waves are received by at least one receiving unit (13, 14), wherein in the at least one transmitting and receiving unit (13, 14) are connected to an on-board computer (16), wherein the memory of the on-board computer (16) stores an evaluation program, by means of which the waves received by the at least one receiving unit (13, 14) and reflected by the material particles in flight are evaluated and the at least one distribution parameter, such as flight direction, flight speed, application rate and/or distribution accuracy, of the applied material particles are determined therefrom, wherein the at least one transmitting and receiving unit (13, 14) is in the form of a radar sensor which emits radar beams, and wherein, in accordance with the at least one determined distribution parameter, the on-board computer (16) provides at least one adjustment parameter of the metering (5) and/or distribution elements (6, 7, 8) of the spreader in accordance with an adjustment program stored in its memory, adjustment algorithms and/or adjustment tables, **characterized in that** the radar beams have a wavelength of between 2 mm and 15 mm.

2. Apparatus according to Claim 1, **characterized in that** the respective transmitting and/or receiving unit (13, 14) is arranged outside the orbits of the thrower blades (7, 8) arranged on the centrifugal disc (6).

3. Apparatus according to Claim 1, **characterized in that** the transmitting and/or receiving units (13) have a plurality of transmitting and/or receiving elements (14).

4. Apparatus according to Claim 1 or 3, **characterized in that** the transmitting and/or receiving elements (14) assigned to the respective transmitting and/or receiving unit (13) are arranged in an at least approximately circular manner around the centrifugal disc (6) outside the orbits of the thrower blades (7, 8) arranged on the centrifugal disc (6).

5. Apparatus according to Claim 3, **characterized in that** the respective transmitting and/or receiving units (13, 14) are arranged in an at least approximately circular manner around the centrifugal disc (6) outside the orbits of the thrower blades (7, 8) arranged on the centrifugal disc (6).

6. Apparatus according to Claim 1, **characterized in that** the radar beams are emitted in an opening radiating range of at least 20°.

7. Apparatus according to Claim 1, **characterized in that** the radar beams are emitted by the radar sensor (14) in such a manner that the emitted radar beams intersect the flight path of the shed material particles in flight, to be precise in such a manner that the angle between the emitted radar beams and the material flight path is not equal to 90°.

8. Apparatus according to Claim 7, **characterized in that** the radar beams are emitted by the radar sensor (14) in such a manner that the emitted radar beams intersect the flight path of the shed material particles in flight, to be precise in such a manner that the angle between the emitted radar beams and the material flight path is between 5° and 70°.

## Revendications

1. Dispositif pour déterminer au moins un paramètre de distribution des particules de matière épandues de manière réglable par un épandeur centrifuge et distribuées sur la surface du sol en distribution en largeur par des pales d'éjection (7, 8) disposées sur un disque centrifuge (6) entraîné en rotation par des ondes électromagnétiques émises par au moins une unité d'émission (13, 14), lesquelles sont réfléchies par les particules de matière qui sont en vol et les ondes réfléchies étant reçues par au moins une unité de réception (13, 14), dans l'au moins une unité d'émission et de réception (13, 14) étant reliées à un ordinateur de bord (16), un programme d'interprétation étant enregistré dans l'ordinateur de bord (16), au moyen duquel les ondes reçues par l'au moins une unité de réception (13, 14) et réfléchies par les particules de matière qui sont en vol sont interprétées et l'au moins un paramètre de distribution, comme la direction du vol, la vitesse de vol, la quantité épandue et/ou la précision de distribution des particules de matière épandues, sont déterminés à partir de celles-ci, l'au moins une unité d'émission et de réception (13, 14) étant réalisée sous la forme d'un capteur radar qui émet des rayons radar et l'ordinateur de bord (16), conformément à l'au moins un paramètre de distribution déterminé, met à disposition au moins un paramètre de réglage des organes de dosage (5) et/ou de distribution (6, 7, 8) de l'épandeur conformément à un programme de réglage, des algorithmes de réglage et/ou des tableaux de réglage stockés dans sa mémoire, **caractérisé en ce que** les rayons radar possèdent une longueur d'onde entre 2 mm et 15 mm.

2. Dispositif selon la revendication 1, **caractérisé en ce que** l'unité d'émission et/ou de réception (13, 14) respective est disposée en-dehors des trajectoires de révolution des pales d'éjection (7, 8) disposées sur le disque centrifuge (6).

3. Dispositif selon la revendication 1, **caractérisé en ce que** les unités d'émission et/ou de réception (13) possèdent plusieurs éléments d'émission et/ou de réception (14).

4. Dispositif selon la revendication 1 ou 3, **caractérisé en ce que** les éléments d'émission et/ou de réception (14) associés à l'unité d'émission et/ou de réception (13) respective sont disposés de manière au moins approximativement circulaire autour du disque centrifuge (6) en-dehors des trajectoires de révolution des pales d'éjection (7, 8) disposées sur le disque centrifuge (6).

5. Dispositif selon la revendication 3, **caractérisé en ce que** les unités d'émission et/ou de réception (13, 14) respectives sont disposées de manière au moins approximativement circulaire autour du disque centrifuge (6) en-dehors des trajectoires de révolution des pales d'éjection (7, 8) disposées sur le disque centrifuge (6).

6. Dispositif selon la revendication 1, **caractérisé en ce que** les rayons radar sont émis dans une région émissive qui s'ouvre d'au moins 20°.

7. Dispositif selon la revendication 1, **caractérisé en ce que** les rayons radar sont émis par le capteur radar (14) de telle sorte que les rayons radar émis croisent la trajectoire de vol des particules de matière qui sont en vol, et ce de telle sorte que l'angle entre les rayons radar émis et la trajectoire de vol de la matière est différent de 90°.

8. Dispositif selon la revendication 7, **caractérisé en ce que** les rayons radar sont émis par le capteur radar (14) de telle sorte que les rayons radar émis croisent la trajectoire de vol des particules de matière qui sont en vol, et ce de telle sorte que l'angle entre les rayons radar émis et la trajectoire de vol de la matière est compris entre 5° et 70°.
